Europäisches Patentamt

European Patent Office

Office européen des brevets

(11) Publication number: **0 360 600**
**A2**

## (12) EUROPEAN PATENT APPLICATION

(21) Application number: 89309593.5

(22) Date of filing: 21.09.89

(51) Int. Cl.⁵: **A 23 K 1/20**
**A 23 K 1/175, A 23 K 1/02,**
**A 23 K 1/08**

(30) Priority: 22.09.88 GB 8822245

(43) Date of publication of application:
28.03.90 Bulletin 90/13

(84) Designated Contracting States:
DE ES FR GB IT NL

(71) Applicant: TATE & LYLE INDUSTRIES LIMITED
Sugar Quay Lower Thames Street
London, EC3R 6DQ (GB)

(72) Inventor: Thompson, Frederick
8 Ashby Road
Kegworth Derby DE7 2DH (GB)

Mitchell, Anthony John
1 Carlton Crescent
Stockport Cheshire (GB)

(74) Representative: Wallbank, Roger Wickham et al
BARKER, BRETTELL & DUNCAN 138 Hagley Road
Edgbaston Birmingham, B16 9PW (GB)

(54) Feed blocks for animals.

(57) In the manufacture of a feed block there is a base material, such as molasses, comprising an aqueous solution of carbohydrates. An insoluble phosphate-bearing material, such as rock phosphate, in particulate form is added to it. An acid, such as sulphuric acid, is added and reacts with the phosphate-bearing material. An alkali earth metal oxide or hydroxide is added to enable the mixture to set, a suitable material being magnesium oxide. The ratio of calcium to phosphorus in the block may be about two to one. The mixture may also include any one or more of the following: fatty material as a source of energy, a medicament such as an anthelmintic, and a trace element. Fibrous material, such as strawmeal, may be included to assist in holding the block together.

EP 0 360 600 A2

Description

# FEED BLOCKS FOR ANIMALS

This invention relates to feed blocks for animals.

Feed blocks serve to provide animals with edible materials and are often used to provide animals with materials that they otherwise lack or can obtain only in quantities insufficient for their well-being. Some feed blocks may serve primarily as sources of food or supplementary food and may be so formulated as to fulfil particular needs such as to provide sources of energy or protein. Alternatively, or in addition, they may serve as vehicles for providing animals with medicaments or the like, such as anthelmintics or trace elements that are otherwise available to the animals in insufficient amounts. Thus, while the blocks normally include foodstuffs their prime purpose, in some instances, may be to provide medicaments or the like. Nevertheless such blocks are for convenience referred to herein as feed blocks.

It has been known for many years that feed blocks can be readily made by mixing molasses with calcium oxide or calcium hydroxide. The reason why the molasses solidifies in the presence of the calcium constituent is not fully understood. Feed blocks made in this way enable molasses to be readily handled and enable it to be presented to animals in a form they can readily take. Nevertheless, they suffer from several disadvantages. First, they tend to be very hard and brittle and to crack readily in use. Secondly, the chemical reaction that occurs during their formation tends to be quite vigorous and to occur relatively rapidly so that care has to be exercised to ensure that the mixture does not set before it has been introduced into appropriate moulds. Thirdly, the blocks tend to include so high a concentration of calcium that animals feeding unrestrictedly on the blocks tend to ingest more calcium than is good for them.

Various means have been adopted with a view to reducing or overcoming those disadvantages. For example, soluble phosphorus compounds, and in particular soluble phosphates and phosphoric acid, have been added to the mixture, the presence of those compounds enabling the concentration of calcium to be reduced. Such phosphorus compounds, however, tend to be relatively expensive. It is also known to add magnesium oxide to the mixture, this being used to replace some of the calcium oxide or hydroxide and to provide a source of magnesium which may serve to counter magnesium-deficiency in some animals. The maximum proportion of magnesium oxide that can safely be employed, however, is relatively low.

One aim of the present invention is to provide an improved method of making a feed block for animals.

From a first aspect the present invention consists in a method of making a feed block for animals in which method there are mixed together a base material, comprising an aqueous solution of one or more carbohydrates, a phosphate-bearing material that is insoluble in water, the phosphate-bearing material being in particulate form, an acid that reacts with the phosphate-bearing material, and a sufficient quantity of an alkali earth metal oxide or hydroxide to enable the mixture to set.

The invention makes it possible to use relatively inexpensive phosphate-bearing materials. How the method operates is not fully understood but it seems probable that a reaction occurs between the acid and the phosphate-bearing material that releases soluble phosphates or phospate ions which assist in the setting of the mixture.

From a second aspect the present invention consists in an animal feed block made by a method in accordance with the first aspect of the present invention.

The base material preferably comprises at least one of the following materials: molasses, condensed molasses solubles (CMS), whey. Although the presence of molasses is not absolutely essential in forming a block, it is particularly preferred to include molasses. Cane molasses is preferred.

The phosphate-bearing material preferably comprises a calcium phosphate, and may comprise at least one of the following: rock phosphate, mono-dicalcium phosphate, di-calcium phosphate or tri-calcium phosphate. The material is reduced to particulate form and is conveniently, as by grinding, reduced to a granular consistency which may be similar to that of a fine sand. Raw rock phosphate may be used, and fertiliser grades of mono-dicalcium phosphate and di-calcium phosphate may be used. All of those materials are relatively inexpensive and are often readily available.

The acid may be any suitable acid that is capable of reacting with the phosphate-bearing material and of which the use does not yield poisonous reaction products. Sulphuric acid is preferred, but another acid such as hydrochloric acid or formic acid may be used. A mixture of acids may be used if desired.

Finally, the alkali metal oxide or hydroxide preferably comprises magnesium oxide and is preferably introduced into the mixture in the form of a fine powder. The powder is preferably of relatively high purity and is such that when subjected to the well-known test in which it is wetted with a solution of citric acid, a phenolphthalein indicator is turned pink in no more than 20 seconds. Calcium oxide or hydroxide may be used, if desired, but its presence is not essential. Rock phosphate contains calcium, and of course mono-dicalcium phosphate, di-calcium phosphate and tri-calcium phosphate also contain calcium, so that if any of those preferred phosphates is used the completed feed blocks necessarily contain calcium. It is believed that calcium compounds released by the reaction between the insoluble phosphate-bearing material and the acid also assist in the solidification of the blocks.

It has been found that use of the present invention makes it readily possible to provide a mixture that can easily be stirred and can easily be poured into a mould or moulds and then sets to form a block or blocks after a period of a few hours. Moreover, in general it has been found that when a suitable formulation has been devised, minor variations from that formulation do not adversely affect the physical properties of the mixture and of the resultant block to any great extent. The invention may therefore be usable by relatively unskilled people.

Any one or more of a wide range of additional materials may be included in the mixture. For example, fats may be included to provide a source of energy for the animals using the blocks. One or more medicaments such as an anthelmintic may be included, as may sources of trace elements. Fibrous material, such as straw or bagasse, may be included in order to assist in holding the block together in the event of it being cracked or chipped. Fibrous material may also serve to absorb excess water in the mixture.

In general it is found that the ingredients can be mixed together in any order. Nevertheless, it is usually best to start with the base material and to add the remaining ingredients to it. When the base material comprises molasses, it is generally desirable to heat the material before additions are made to it. This may be done by placing the material in a vessel having external heating means such as steam coils. Alternatively, or in addition, heat may be generated by adding a little calcium oxide. This causes a vigorous exothermic reaction to occur. This initial heating of the base material helps to reduce the viscosity of the material so as to make it easier for the other ingredients to be mixed with it; it also enables the subsequent reactions to occur at raised temperatures; finally it helps to heat the final mixture to a temperature which renders the mixture suitable for pouring into moulds. A suitable temperature to which the base material is initially heated can readily be determined by experiment; nevertheless it is unlikely to be less than about 26°C or more than about 40°C.

In mixtures that include calcium hydroxide, this is preferably added next in the form of a slurry with water. It is preferred to stir the base material continuously during this addition and to continue stirring until the mixture is completed. The addition of the calcium hydroxide causes an exothermic reaction to occur and therefore normally causes the temperature to rise somewhat.

The phophate-bearing material in particulate form is preferably added next, and is preferably dispersed throughout the mixture by stirring before further additions are made.

It is then preferred to add the acid, while the mixture is preferably stirred. Preferably there is no excessive time-delay between the addition of the phosphate-bearing material and the addition of the acid. The reaction that occurs when the acid is added is exothermic and again it therefore normally causes a further rise in temperature, typically to 55°C. As this occurs there is often a tendency for the mixture initially to become more viscous and then to become less viscous.

Finally, where the mixture includes magnesium oxide, this is preferably added, while the mixture is preferably stirred. Yet again an exothermic reaction occurs with the result that the temperature of the mixture rises.

After the ingredients have been fully mixed together, the resultant mixture is poured into moulds and allowed to set. The mixture is preferably at about 60°C when it is poured. If it has not reached that temperature as the result of the sequence of exothermic reactions that have taken place heat from an external source is preferably applied to it. The moulds may be of any suitable form but are preferably porous to assist in the solidification or setting of the mixture. The moulds may, for example, comprise open-topped boxes made from cardboard or the like. Nevertheless, if desired the moulds may comprise flexible bags such as bags made of polyurethane or the like impervious plastics material. The mixture may take several hours to become solid and may take a longer period before it reaches its final hardness. Setting may take several hours.

Molasses generally comprises about one half sucrose, one quarter other solids and one quarter water. When the base material consists solely of molasses, it can comprise up to about 75% by weight of the mixture from which blocks are made but it is preferred to use a mixture containing less molasses, a satisfactory mixture typically containing about 50% molasses by weight. Whatever base material or mixture of base materials is used, the total amount of soluble carbohydrates in the block-forming mixture is preferably no more than about 33% by weight, a satisfactory mixture often containing about 25% by weight.

The phosphate-bearing material preferably constitutes between about 5% and about 35% of the mixture by weight, a typical mixture containing about 14%.

The ratio of calcium to phosphorous in the final mixture is preferably no more than about two to one by weight, although the ratio could be more than that if desired. In fact, a ratio of about two to one is often to be preferred. The phosphate-bearing material may contain calcium, and indeed it is preferred to use a phosphate-bearing material that does include calcium. All the calcium required in a mixture may be derived from such a phosphate-bearing material, though it may be necessary or desirable to add additional calcium in the form of calcium oxide or calcium hydroxide. As indicated above, the addition of calcium oxide brings about a vigorous and highly exothermic reaction while the addition of calcium hydroxide brings about a reaction that is less vigorous and less exothermic.

When sulphuric acid is used, it is preferred to add it in the form of an aqueous solution it is often convenient to use a solution containing 80% sulphuric acid by volume. In any case it is preferred to use a solution containing no less than 45% acid. The mixture may contain about 4% of sulphuric acid by weight. It is desirable for there to be at least sufficient phosphate-bearing material present to react with all of the acid that is added so that there remains no excess of acid. There may, however, remain an excess of phosphate-bearing material. This is believed to take little or no part in the solidification of the mixture but may be of value to the animals ingesting material from the finished block.

When magnesium oxide is employed it preferably constitutes no more than about 7% of the mixture by weight. In the absence of other materials helping to promote setting, there is likely to be present a minimum of about 5% magnesium oxide by weight. If such other materials are present, however, the quantity of magnesium oxide may be reduced below 5%. Materials for absorbing water, such as straw, may help to promote setting and enable the magnesium oxide content to be reduced.

Use of materials of the kind described above enables blocks with appropriate physical properties to be made. Other materials can also be included, those materials being of value in, for example, preserving the blocks and providing medicaments and additional nutrients for animals.

Examples embodying the invention are given below. In each instance the fundamental ingredients are mixed in the manner and in the order outlined above; particulars specific to the individual examples are included in the examples themselves. In each instance the percentages of the ingredients are by weight. In each instance the sulphuric acid contains 80% by volume, the remainder being water. The magnesium oxide is in each instance a pure, finely powdered product marketed under the trade mark Lycal.

Example 1

| Molasses | 55.7% |
|---|---|
| Slaked lime | 2.0% |
| Water | 2.8% |
| Dicalcium phosphate | 14.0% |
| Sulphuric acid | 4.0% |
| Magnesium oxide | 6.5% |
| Fat | 15.0% |

The fat is a blend of animal fats suitable for ruminants and is the last of the constituents to be added.

Example 2

| Molasses | 34.15% |
|---|---|
| Slaked lime | 2.5% |
| Water | 3.5% |
| Dicalcium phosphate | 5.0% |
| Sulphuric acid | 3.5% |
| Magnesium oxide | 5.0% |
| Sodium chloride (hydrated) | 45.0% |
| Zinc oxide | 0.2222% |
| Potassium iodate | 0.0169% |
| Selenite premix | 0.2044% |
| Cobalt sulphate | 0.0476% |
| Manganous oxide | 0.3226% |
| Copper sulphate | 0.3906% |
| Vitamins A and $D_3$ | 0.075% |
| Vitamin E | 0.075% |

The selenite premix contains 1% of sodium selenite in an inert carrier. The mixture of vitamins A and $D_3$ contains five parts of vitamin A to one part vitamin $D_3$. The block is intended to boost an animal's daily intake of salt and trace elements.

Example 3

This is similar to Example 2 except for the proportions of the following ingredients:-

| Molasses | 35.0% |
|---|---|
| Slaked lime | 4.7% |
| Water | 5.2% |
| Dicalcium phosphate | 0.0% |
| Tricalcium phosphate | 29.0% |
| Magnesium oxide | 5.5% |
| Sodium chloride (hydrated) | 15.7457% |

The principal differences between this block and the block of Example 2 are that dicalcium phosphate is replaced by tricalcium phosphate and that the proportion of phosphate-bearing material is increased while the proportion of sodium chloride is reduced. The block is of use in providing animals with a supplementary source of minerals.

Example 4

| Molasses | 67.0% |
|---|---|
| Slaked lime | 2.5% |
| Water | 3.5% |
| Rock phosphate | 15.0% |
| Sulphuric acid | 4.0% |
| Magnesium oxide | 6.5% |
| Strawmeal | 1.5% |

Example 5

| Molasses | 27.3% |
|---|---|
| CMS | 27.3% |
| Slaked lime | 2.5% |
| Water | 3.0% |
| Dicalcium phosphate | 14.0% |
| Sulphuric acid | 4.0% |
| Magnesium oxide | 6.5% |
| Urea | 4.0% |
| Fat | 10.0% |
| Strawmeal | 1.0% |
| Propionic acid | 0.4% |

The fat is similar to that used in Example 1. The propionic acid acts as a preservative.

**Claims**

1. A method of making a feed block for animals, which method is characterised in that there are mixed together a base material, comprising an aqueous solution of one or more carbohydrates, a phosphate-bearing material that is insoluble in water, the phosphate-bearing material being in particulate form, an acid that reacts with the phosphate-bearing material, and a sufficient quantity of an alkali earth metal oxide or hydroxide to enable the mixture to set.

2. A method according to claim 1 characterised in that the base material comprises at least one of the following materials: molasses, condensed molasses solubles, whey.

3. A method according to either of claims 1 and 2 characterised in that the phosphate-bearing material comprises at least one of the following: rock phosphate, mono-dicalcium phosphate, di-calcium phosphate and tri-calcium phosphate.

4. A method according to any one of the preceding claims characterised in that the acid comprises at least one of the following: sulphuric acid, hydrochloric acid and formic acid.

5. A method according to any one of the preceding claims characterised in that the mixture includes calcium oxide or calcium hydroxide or both.

6. A method according to any one of the preceding claims characterised in that the mixture includes magnesium oxide.

7. A method according to any one of the preceding claims characterised in that the mixture includes at least one calcium-bearing material and in which the ratio of calcium to phosphorus is about two to one.

8. A method according to any one of the preceding claims characterised in that the base material is heated to a temperature of between 26°C and 40°C before the phosphate-bearing material and acid are mixed with it.

9. A method according to any one of the preceding claims characterised in that the mixture includes edible fatty material as a source of energy.

10. A method according to any of the preceding claims characterised in that the mixture includes at least one medicament or source of a trace element.

11. A method according to any one of the preceding claims characterised in that the mixture includes fibrous material which assists in holding the block together.

12. A feed block characterised in that it is made by a method in accordance with any of the preceding claims.